# EUROPÄISCHE PATENTSCHRIFT

(11) **EP 0 872 170 B1**
(45) Veröffentlichungstag und Bekanntmachung des Hinweises auf die Patenterteilung: **09.07.2003**
(21) Anmeldenummer: 98106555.0
(22) Anmeldetag: 09.04.1998
(51) Int. Cl.: A01D 78/10

(54) **Heuwerbungsmaschine**
Haymaking machine
Machine de fenaison

(30) Priorität: 18.04.1997 DE 19716379
(43) Veröffentlichungstag der Anmeldung: 21.10.1998
(73) Patentinhaber: Maschinenfabrik Bernard Krone GmbH, 48480 Spelle (DE)
(72) Erfinder: Krone, Bernard, 48480 Spelle (DE); Horstmann, Josef, Dipl.-Ing., 49479 Ibbenbüren (DE)

(56) Entgegenhaltungen:
- EP-A- 0 381 970
- EP-A- 0 503 396
- WO-A-96/15657
- DE-A- 4 340 384
- DE-U- 9 114 316
- DE-U- 9 305 014
- DE-U- 29 521 619
- DE-U- 29 716 391
- FR-A- 2 663 189
- FR-A- 2 716 331

## Beschreibung

Die Erfindung bezieht sich auf eine Heuwerbungsmaschine, insbesondere zum Schwaden von landwirtschaftlichem Halmgut, wie beispielsweise Heu, Stroh oder angewelktem Grüngut gemäß dem Oberbegriff des Anspruches 1. Eine solche Heuwerbungsmaschine umfaßt zumindest zwei umlaufend angetriebene Kreiselrechen oder dgl. Rechelemente und dient der Bildung von einem mittig hinter den Kreiselrechen abgelegten Schwad. In der heutigen Zeit werden von der Praxis immer größere Arbeitsbreiten gefordert, um auch weiterhin einen wirtschaftlichen Einsatz derartiger Heuwerbungsmaschinen sowie den diesen nachfolgenden Maschinen und Geräten zu gewährleisten. Eine Vergrößerung der Arbeitsbreiten ist jedoch mit großen konstruktiven Anstrengungen verbunden, beispielsweise bei der Umstellung zwischen einer Arbeits- und Betriebsstellung und einer durch gesetzlich vorgeschriebene Abmessungen (maximale Transporthöhe und -breite) vorgegebene Transportstellung oder bei der Realisierung kostengünstiger und bedienerfreundlicher Antriebskonzepte.

Bei einer bereits bekannten Heuwerbungsmaschine gemäß der DE 43 40 384 A1 wird ein Tragarm für die Rechräder einer mit zwei Rechrädern versehenen Heuwerbungsmaschine vorgeschlagen, die zwischen einer Arbeitsstellung zur Herstellung von Seitenschwaden und einer Arbeitsstellung zur Ablage von zwei Einzelschwaden umstellbar ist. Diese Umstellung erfordert eine Vergrößerung oder Verkleinerung des Abstandes der Rechräder zueinander quer zur Fahrtrichtung. Dazu sind die Tragarme als Verschiebeteile ausgebildet, welche innerhalb einer schwenkbar an einem Maschinenrahmen angelenkten Schiebeführung quer zur Fahrtrichtung verschiebbar gehaltert sind. Zur Überführung aus der Arbeitsstellung in die Transportstellung können die Schiebeführungen aus einer in etwa horizontalen Stellung in eine in etwa vertikale Stellung um eine in Fahrtrichtung gerichtete Achse verschwenkt werden. Bei einer Vergrößerung der Arbeitsbreite auf beispielsweise dem Drei- bis Vierfachen der maximal zulässigen Transportbreite erweisen sich derartig gestaltete Tragarme als ungeeignet, da zur überführung der Kreiselrechen aus der Arbeitsstellung in die Transportstellung so große Verschiebungen der Verschiebeteile erforderlich sind, daß in der Transportstellung keine bzw. keine ausreichende Bodenfreiheit der Heuwerbungsmaschine mehr erreichbar ist. Außerdem ergibt sich bei einer derartigen Gestaltung der Tragarme eine hohe Anlenkhöhe der Tragarme am Maschinenrahmen, wodurch die Baugröße und damit auch die Baukosten nachteilig beeinflußt werden.

In der DE 27 07 559 C2 ist beispielsweise eine Heuwerbungsmaschine in Form einer Universalmaschine zum Zetten, Wenden und Schwaden mit vier umlaufend angetriebenen Kreiselrechen offenbart, bei der in einer Arbeitsstellung zum Schwaden die Kreiselrechen paarweise gleichlaufend drehen und eine V-förmige Anordnung zueinander aufweisen. Hier sind den äußeren Kreiselrechen innere Kreiselrechen so nachgeordnet, daß eine durchgehende Arbeitsbreite und die Ablage eines mittig hinter den inneren Kreiselrechen abgelegten Schwades erreichbar ist. Die Kreiselrechen sind dabei über Tragarme um vertikale Achsen schwenkbar an einem Tragrahmen angelenkt, der an eine Dreipunkthubeinrichtung eines landwirtschaftlichen Schleppers oder dgl. Zug- und Antriebsmaschine ankuppelbar ist. Zum Transport einer solchen Heuwerbungsmaschine ist es vorgesehen, die an den schwenkbaren Tragarmen angebrachten Kreiselrechen so zu verschwenken, daß jeweils die inneren und die äußeren Kreiselrechen, bezüglich der Fahrt- und Arbeitsrichtung nebeneinander angeordnet sind. Daraus ist jedoch erkennbar, daß der Heuwerbungsmaschine bzw. den einzelnen Kreiselrechen Arbeitsbreiten zugrunde liegen, mit denen in der heutigen Zeit ein wirtschaftlicher Einsatz nicht mehr möglich ist.

Aufgabe der Erfindung ist es, eine Heuwerbungsmaschine, insbesondere zum Schwaden von landwirtschaftlichem Halmgut mit zumindest einer dem Drei- bis Vierfachen der für den Straßentransport zulässigen maximalen Transportbreite entsprechenden Gesamtarbeitsbreite zu schaffen, bei der mittels einer konstruktiv einfachen, kostengünstigen und bedienerfreundlichen Trag- und Antriebsanordnung die Rechelemente aus der nahezu bodenparallelen, die maximale Arbeitsbreite bestimmenden Arbeits- und Betriebsstellung in eine in etwa vertikale, die maximal zulässige Transporthöhe nicht überschreitende Transportstellung und zurück überführbar sind. Die Antriebsverbindungen zu den Rechelementen sollen dabei so gestaltet sein, daß keinerlei Umstellungsarbeiten erforderlich sind und etwaige Blockierungen des Antriebes der Rechelemente in der Transportstellung ausgeschlossen sind.

Zur Lösung der gestellten Aufgabe zeichnet sich die Heuwerbungsmaschine der vorstehend genannten Art durch die im kennzeichnenden Teil des Anspruches 1 angegebenen Merkmale aus. Hinsichtlich der weiteren Ausgestaltung der Erfindung wird auf die Ansprüche 2 bis 21 verwiesen.

Eine erfindungsgemäße Heuwerbungsmaschine, insbesondere zum Schwaden von landwirtschaftlichem Halmgut weist zumindest vier Kreiselrechen oder dgl. Rechelemente auf, wobei die vorderen äußeren Kreiselrechen und die diesen nachgeordneten inneren Kreiselrechen eine V-förmige Anordnung zueinander einnehmen, so daß eine durchgehende maximale, zumindest dem Drei- bis Vierfachen der maximal zulässigen Transportbreite entsprechenden Gesamtarbeitsbreite erreichbar ist. Vorzugsweise wird sogar von einer Gesamtarbeitsbreite ausgegangen, die oberhalb von 12 m liegt.

Um die vorderen äußeren Kreiselrechen einer Heuwerbungsmaschine mit einer solchen Gesamtarbeitsbreite aus der Arbeits- und Betriebsstellung in eine Transportstellung überführen zu können, sind erfindungsgemäß längenveränderliche Trag- und Antriebsanordnungen vorgesehen, welche um in Fahrt- und Arbeitsrichtung gerichtete Schwenkachsen beidseitig an einem Tragrahmen der Heuwerbungsmaschine schwenkbar gelagert sind. Die Trag- und Antriebsanordnungen sind dabei so am Tragrahmen angelenkt, daß die dem Tragrahmen zugewandten Enden der Trag- und Antriebsanordnungen in der Arbeits- und Betriebsstellung einen großen horizontalen Abstand zu einer vertikalen Längsmittelebene des Tragrahmens und einen großen vertikalen Abstand zum Erdboden hin aufweisen, während die dem Tragrahmen zugewandten Enden der Trag- und Antriebsanordnungen nach einer Überführung aus der Arbeits- und Betriebsstellung in die Transportstellung einen möglichst geringen horizontalen Abstand zur vertikalen Längsmittelebene des Tragrahmens und einen möglichst kleinen vertikalen Abstand zum Erdboden hin einnehmen. Um diesen Effekt zu erreichen, ist es nach der Erfindung vorgesehen, daß die Schwenkachsen der Trag- und Antriebsanordnungen bezüglich der Arbeits- und Betriebsstellung unterhalb von den Trag- und Antriebsanordnungen liegen und in Bezug zur Transportstellung in einem von den in etwa vertikal angestellten Trag- und Antriebsanordnungen zur Außenlängsseite des Tragrahmens weisenden Abstand angeordnet sind. Somit wird die Überführung der vorderen äußeren Kreiselrechen der Heuwerbungsmaschine aus der Arbeits- und Betriebsstellung in die Transportstellung und zurück durch eine einfache Schwenkbewegung der Trag- und Antriebsanordnungen der vorderen äußeren Kreiselrechen erreicht, wobei der Schwenkbewegung eine Längenänderung (Verkürzung oder Verlängerung) der Trag- und Antriebsanordnungen zeitlich überlagert oder nachgeschaltet sein kann.

Eine vorteilhafte Ausbildung der Erfindung sieht vor, daß die Trag- und Antriebsanordnungen der vorderen äußeren Kreiselrechen die Form eines Winkelhebels aufweisen, wobei die kurzen Schenkel am Tragrahmen um die in Fahrt- und Arbeitsrichtung gerichteten Schwenkachsen gelagert sind. Um die Länge verändern zu können, sind die langen Schenkel der als Winkelhebel ausgeführten Trag- und Antriebsanordnungen teleskopisch ein- und ausfahrbar ausgebildet, wozu vorzugsweise hydraulische Kolben-Zylinder-Anordnungen verwendet werden können. Es ist jedoch auch vorstellbar, zur Längenveränderung der Trag- und Antriebsanordnungen andere, eine Zug- oder Druckkraft erzeugende Stellglieder zu verwenden, wie beispielsweise elektrische Stellmotoren.

Zur Schaffung eines einfachen Antriebskonzeptes der Heuwerbungsmaschine sind an den dem Tragrahmen zugewandten Enden der Trag- und Antriebsanordnungen als Winkelgetriebe ausgebildete Eingangsgetriebe angeordnet, welche vorzugsweise über Gelenkwellen oder dgl. Antriebselemente mit einem auf dem Tragrahmen angebrachten zentralen Verteilergetriebe verbunden sind. Dadurch wird es ermöglicht, daß durch die Antriebsverbindungen vom zentralen Verteilergetriebe zu den Eingangsgetrieben der Tragund Antriebsanordnungen in der Arbeits- und Betriebsstellung ein störungsfreier Antrieb der vorderen äußeren Kreiselrechen erreichbar ist und daß zur Überführung der vorderen äußeren Kreiselrechen aus der Arbeits- und Betriebsstellung in die Transportstellung keinerlei Umstell- oder Umbauarbeiten des Antriebs der Kreiselrechen erforderlich sind. Eventuell auftretende Blockierungen der Antriebsverbindungen bei der Überführung der vorderen äußeren Kreiselrechen aus der Arbeits- und Betriebsstellung in die Transportstellung sind hierbei ebenfalls sicher auszuschließen. Zwischen den Eingangsgetrieben der Trag- und Antriebsanordnungen und den Kreiselrechen sind zur Antriebsübertragung innenliegende Antriebswellen vorgesehen, die ebenfalls teleskopisch ein- und ausfahrbar sind.

Ein weiterer vorteilhafter Aspekt der Erfindung ist darin zu sehen, daß den Trag- und Antriebsanordnungen der vorderen äußeren Kreiselrechen Kraftspeicher zugeordnet sind, welche sich zwischen den dem Tragrahmen zugewandten Enden der Trag- und Antriebsanordnungen und dem Tragrahmen erstrecken und in der Arbeits- und Betriebsstellung der vorderen äußeren Kreiselrechen eine Entlastunq der Auflagekraft der Kreiselrechen bzw. deren Stützräder auf dem Erdboden bewirken. Dabei sind die Kraftspeicher so angebracht, daß diese in der Transportstellung ein Moment aufbringen, welches den überführungsvorgang der Trag- und Antriebsanordnungen der vorderen äußeren Kreiselrechen aus der Transportstellung in die Arbeits- und Betriebsstellung unterstützt. Die Kraftspeicher sind dazu vorzugsweise als Zugfedern ausgeführt.

Zur Überführung der vorderen äußeren Kreiselrechen aus der Arbeits- und Betriebsstellung in die Transportstellung und zurück, bzw. zur Einleitung der Schwenkbewegung der Trag- und Antriebsanordnungen der vorderen äußeren Kreiselrechen um die in Fahrt- und Arbeitsrichtung gerichteten Schwenkachsen sowie der dazu ebenfalls erforderlichen Längenänderung der Trag- und Antriebsanordnungen sind erfindungsgemäß hydraulische Kolben-Zylinder-Anordnungen vorgesehen, die je nach Ausstattungsvariante der Heuwerbungsmaschine gleichzeitig oder zeitlich und schaltungsmäßig unabhängig voneinander ansteuerbar sind. Für die Standsicherheit der Heuwerbungsmaschine ist es jedoch von großer Bedeutung, daß die zur Einleitung der Schwenkbewegung der Trag- und Antriebsanordnungen vorgesehenen Kolben-Zylinder-Anordnungen sowie die zur Längenänderung der Trag- und Antriebsanordnungen verwendeten Kolben-Zylinder-Anordnungen jeweils gleichzeitig ansteuerbar sind, wobei es sich als vorteilhaft erweist, sogenannte hydraulische Mengenteiler einzusetzen, damit die an den Trag- und Antriebsanordnungen der beiden vorderen Kreiselrechen verwendeten Kolben-Zylinder-Anordnungen an jeder Maschinenseite mit gleichen Mengen des hydraulischen Druckmittels versorgt werden. Zur Erzielung eines größtmöglichen Bedienungskomfort der Heuwerbungsmaschine ist es auch vorstellbar, daß alle Kreiselrechen gleichzeitig aus der Arbeits- und Betriebsstellung in die Transportstellung und zurück bringbar sind.

Eine detaillierte Beschreibung des Gegenstandes der Erfindung erfolgt nun anhand eines Ausführungsbeispieles. In der Zeichnung stellt im einzelnen dar:
- Fig.1: eine Draufsicht einer erfindungsgemäßen Heuwerbungsmaschine in der Arbeits- und Betriebstellung;
- Fig.2: eine Schnittdarstellung der Heuwerbungsmaschine gemäß Schnitt II-II in Fig.1, wobei sich ein Kreiselrechen in der Arbeits- und Betriebsstellung und ein Kreiselrechen in der Transportstellung befindet;
- Fig.3: eine vergrößerte, teilweise abgebrochene Darstellung der Einzelheit X in Fig.2;
- Fig.4: eine Schnittdarstellung der Heuwerbungsmaschine gemäß Schnitt III-III in Fig.1, wobei sich ein Kreiselrechen in der Arbeits- und Betriebsstellung und ein Kreiselrechen in der Transportstellung befindet;
- Fig.5: eine Schnittdarstellung einer erfindungsgemäßen Trag- und Antriebsanordnung eines vorderen äußeren Kreiselrechens in einer auf die maximale Länge ausgefahrenen Stellung;

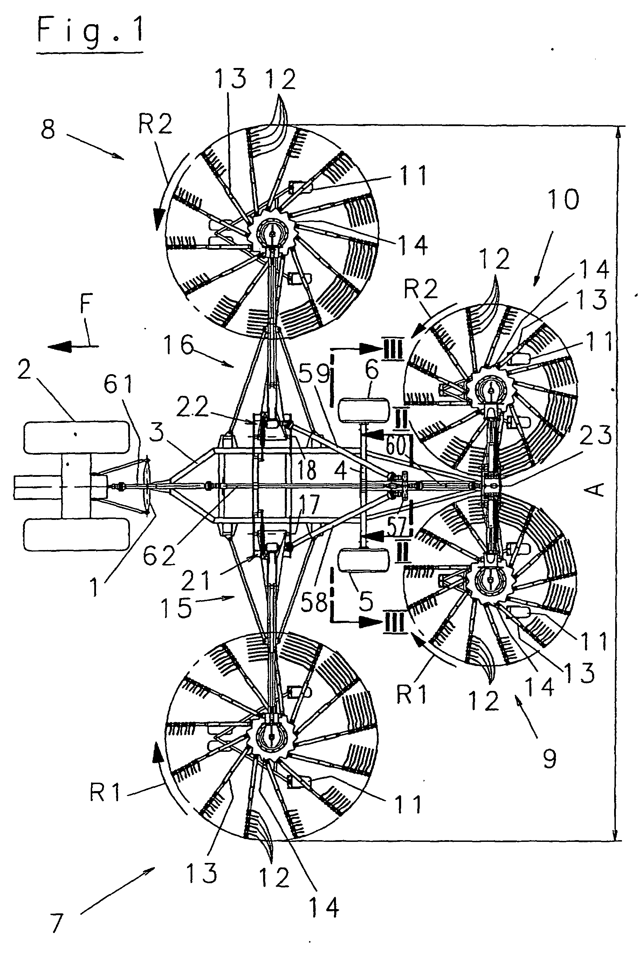

Aus der Fig. 1 ist der Grundaufbau einer erfindungsgemäßen Heuwerbungsmaschine ersichtlich, die über einen Anbaubock 1 an einem landwirtschaftlichen Zugfahrzeug 2 angekuppelt ist. An den Anbaubock 1 schließt sich ein Tragrahmen 3 an, der um eine vertikale Achse schwenkbar mit dem Anbaubock 1 verbunden ist. Etwa im mittleren Bereich des Tragrahmens 3 ist ein fest mit dem Tragrahmen 3 verbundener Fahrwerksträger 4 angebracht, der mit Laufrädern 5,6 bestückt ist. Desweiteren umfaßt die Heuwerbungsmaschine vordere Kreiselrechen 7,8 und hintere Kreiselrechen 9,10, die dem Tragrahmen 3 in einer V-förmigen Anordnung zugeordnet sind und sich über sich selbsttätig der Fahrt- und Arbeitsrichtung F der Heuwerbungsmaschine anpassenden Stützrädern 11 gegenüber dem Erdboden abstützen. Die Kreiselrechen 7,8,9,10 ihrerseits weisen mit Zinken 12 bestückte Zinkenarme 13 auf, die innerhalb eines Kreiselgehäuses 14 gelagert sind und von einer nicht näher dargestellten Steuerkurve innerhalb des Kreiselgehäuses 14 steuerbar sind. Grundsätzlich können alle Kreiselrechen 7,8,9,10 so ausgeführt sein, daß die von den äußeren Zinken 12 der Zinkenarme 13 beschriebenen Durchmesser gleich groß ausgebildet sind. Beim dargestellten Ausführungsbeispiel weisen die hinteren inneren Kreiselrechen 9,10 jedoch einen kleineren Durchmesser auf als die vorderen äußeren Kreiselrechen 7,8. Dadurch daß die hinteren inneren Kreiselrechen 9,10 aber mit der gleichen Anzahl der Zinkenarme 13 ausgerüstet sind und mit gleichen Antriebsdrehzahlen betrieben werden wie die vorderen äußeren Kreiselrechen 7,8 wird eine bessere Recharbeit der hinteren inneren Kreiselrechen 9,10 und somit eine gute Anpassung der Heuwerbungsmaschine an die zur Mitte hin zunehmende Halmgutmenge erreicht. Mit einer Heuwerbungsmaschine gemäß dem dargestellten Ausführungsbeispiel kann eine durchgehende Fläche mit einer Gesamtarbeitsbreite A bearbeitet werden, wobei die Gesamtarbeitsbreite A zumindest dem Drei- bis Vierfachen einer maximal für den Straßenverkehr zulässigen Transportbreite entspricht und im dargestellten Ausführungsbeispiel oberhalb von 12 m liegt. Die für den Straßenverkehr zulässige maximale Transportbreite ist auf 3000 mm gesetzlich festgelegt. Die Drehrichtung der Kreiselrechen 7,8,9,10 entspricht dabei den jeweiligen Drehrichtungspfeilen R1 und R2, so daß mittig hinter den hinteren inneren Kreiselrechen 9,10 ein Schwad abgelegt werden kann, das für einen Einsatz nachfolgender Großmaschinen wie beispielweise Feldhäckseler oder dgl. die richtige Größe aufweist.

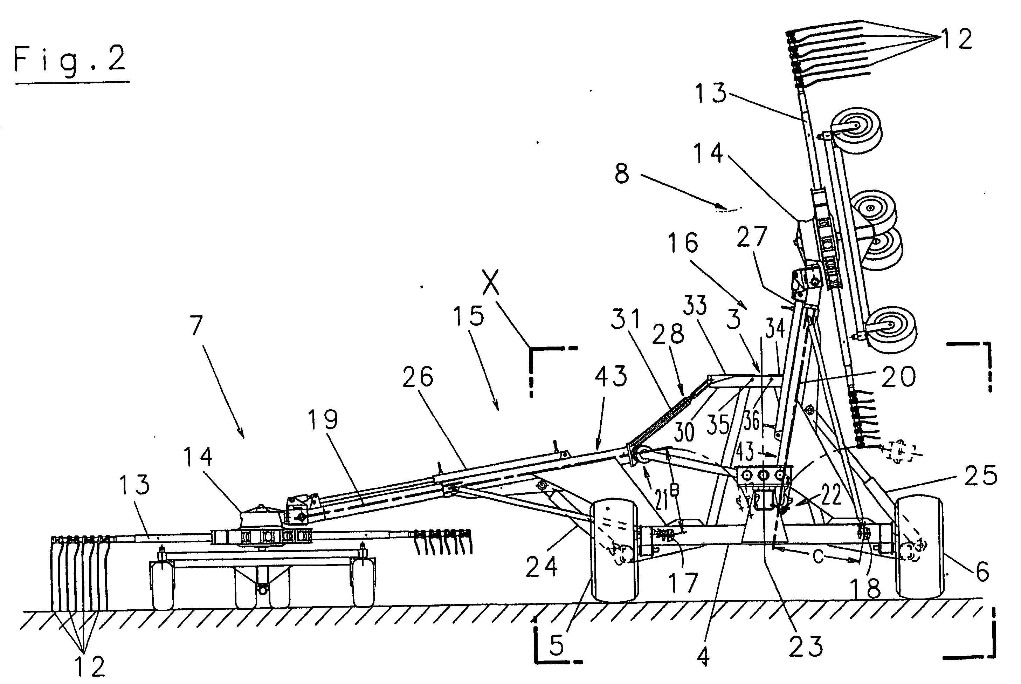

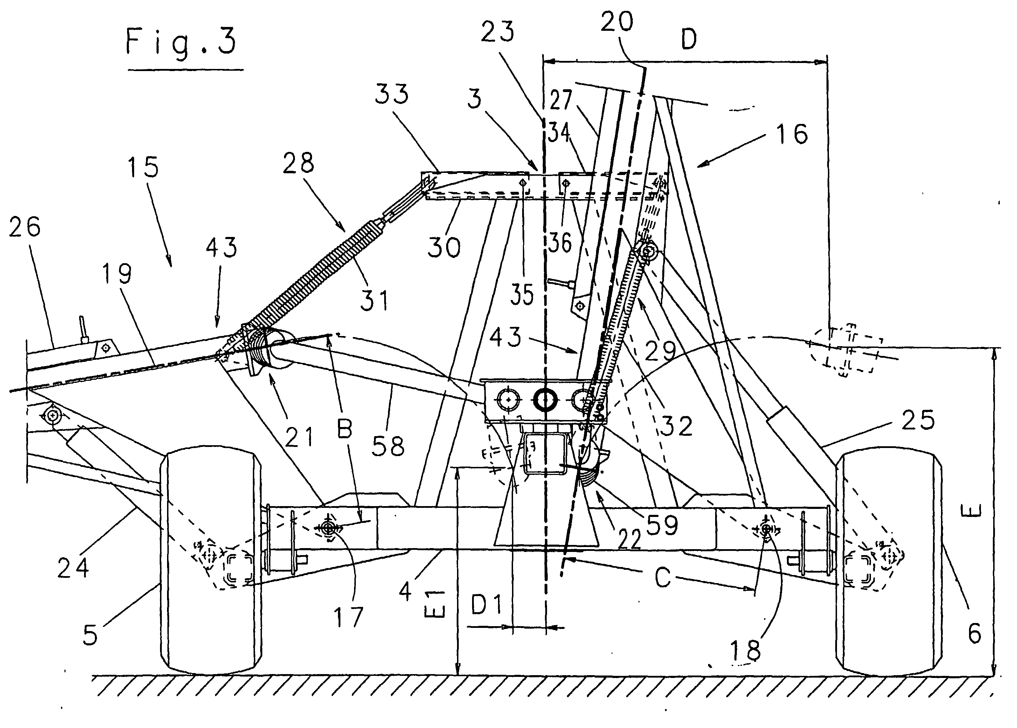

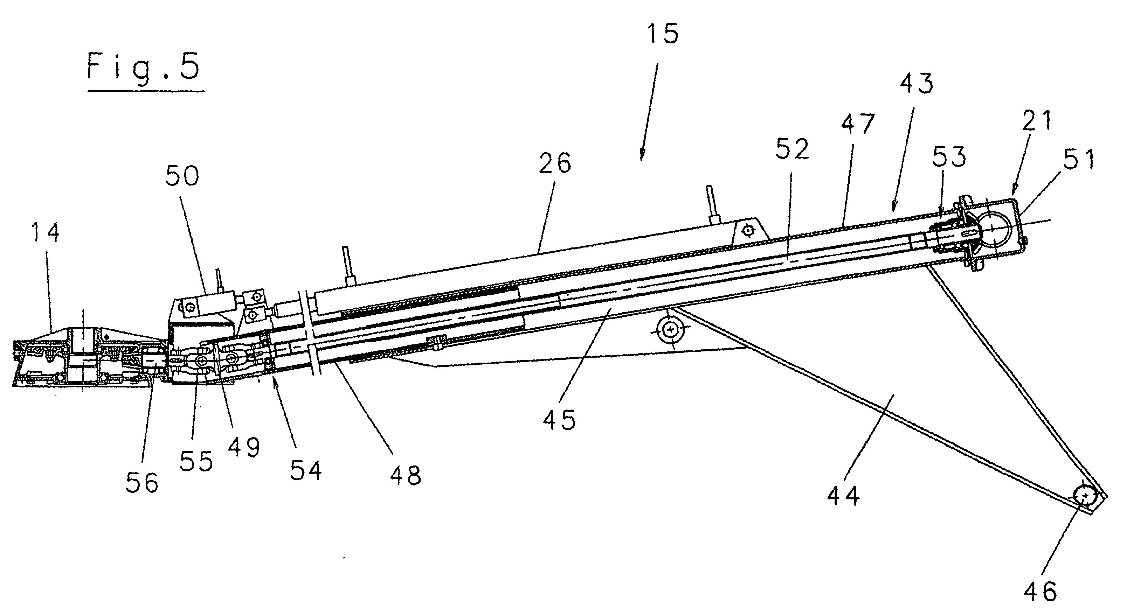

In den Figuren 2 und 3 ist die Anbringung der vorderen äußeren Kreiselrechen 7,8 an dem Tragrahmen 3 näher veranschaulicht, wobei aus Gründen einer besseren Übersichtlichkeit in der Fig.2 lediglich jeweils 2 Zinkenarme 13 der Kreiselrechen 7,8 dargestellt sind. Wie aus diesen Figuren hervorgeht, sind die vorderen äußeren Kreiselrechen 7,8 über Trag- und Antriebsanordnungen 15,16 um in Fahrt- und Arbeitsrichtung F gerichtete Schwenkachsen 17,18 schwenkbar am Tragrahmen 3 gelagert. Die Trag- und Antriebsanordnungen 15,16 sind dabei so ausgebildet, daß durch eine Schwenkbewegung um die in Fahrt- und Arbeitsrichtung F gerichteten Schwenkachsen 17,18 und einer damit einhergehenden Längenänderung (Verkürzung oder Verlängerung) der Trag- und Antriebsanordnungen 15,16 eine Überführung der vorderen äußeren Kreiselrechen 7,8 aus der bodenparallelen, die maximale Gesamtarbeitsbreite A bestimmenden Arbeitsund Betriebsstellung in eine die maximal zulässige Transporthöhe nicht überschreitende Transportstellung und zurück durchführbar ist. Die maximal zulässige Transporthöhe ist gesetzlich auf ein Maß von 4000 mm festgelegt. Um dies zu erreichen, sind die in Fahrtund Arbeitsrichtung F gerichteten Schwenkachsen 17,18 in Bezug zur Arbeits- und Betriebsstellung der Tragund Antriebsanordnungen 15,16 in einem von einer Mittelebene 19,20 der Trag- und Antriebsanordnungen 15,16 nach unten weisenden Abstand B und bezüglich der Transportstellung der Trag- und Antriebsanordnungen 15,16 in einem von der Mittelebene 19,20 zur Außenlängsseite des Tragrahmens 3 weisenden Abstand C angeordnet. Daraus ergibt sich bei der Schwenkbewegung der Trag- und Antriebsanordnungen 15,16 um die in Fahrt- und Arbeitsrichtung F gerichteten Schwenkachsen 17,18, daß dem Tragrahmen 3 zugewandte Enden 21,22 der Trag- und Antriebsanordnungen 15,16, welche in der Arbeits- und Betriebsstellung einen großen horizontalen Abstand D von einer vertikalen Längsmittelebene 23 des Tragrahmens 3 und einen großen vertikalen Abstand E vom Erdboden aufweisen, nach einer Überführung in die Transportstellung einen möglichst geringen horizontalen Abstand D1 von der vertikalen Längsmittelebene 23 und einen möglichst geringen vertikalen Abstand E1 vom Erdboden einnehmen. Im dargestellten Ausführungsbeispiel sind in einer vorteilhaften konstruktiven Ausbildung der Erfindung die Abstandsmaße D,D1 bzw. E,E1 so festgelegt, daß deren Differenzen D-D1 zumindest 930 mm bzw. E-E1 zumindest 460 mm betragen. Dabei wird davon ausgegangen, daß bei der dargestellten Ausbildung der Trag- und Antriebsanordnungen 15,16 die Beträge der Abstandsmaße B,C gleich groß sind und in etwa einem Wert von 725 mm entsprechen. Zur Einleitung der Schwenkbewegung und der damit einhergehenden Längenänderung der Trag- und Antriebsanordnungen 15,16 zur Überführung aus der Arbeits- und Betriebsstellung in die Transportstellung und zurück sind hydraulische Kolben-Zylinder-Anordnungen 24,25,26,27 vorgesehen. Der detaillierte Aufbau der erfindungsgemäßen Trag- und Antriebsanordnungen 15,16 ist in Fig.5 näher veranschaulicht und wird in einem noch folgenden Absatz ausführlich beschrieben.

Wie weiterhin aus den Figuren 2 und 3 zu entnehmen ist, sind den Trag- und Antriebsanordnungen 15,16 Kraftspeicher 28,29 zugeordnet, die sich zwischen den dem Tragrahmen 3 zugewandten Enden 21,22 der Trag- und Antriebsanordnungen 15,16 und einer Halterung 30 des Tragrahmens 3 erstrecken. In der Arbeits- und Betriebsstellung der Trag- und Antriebsanordnungen 15,16 wird von den vorzugsweise als Zugfedern 31,32 ausgeführten Kraftspeichern 28,29 ein Moment auf die Trag- und Antriebanordnungen 15,16 ausgeübt, das eine Reduzierung der Auflagekraft der Kreiselrechen 7,8 bzw. deren Stützräder 11 auf dem Erdboden bewirkt. Bei der Überführung der Tragund Antriebsanordnungen 15,16 aus der Arbeits- und Betriebstellung in die Transportstellung erfolgt nach dem Durchlaufen einer Totpunktlage eine Umkehr der Wirkrichtung des von den Kraftspeichern 28,29 erzeugten Momentes. Das bedeutet, daß die Trag- und Antriebsanordnungen 15,16 entgegen der Wirkung des von den Kraftspeichern 28,29 erzeugten Momentes in der Transportstellung gehalten werden müssen, wodurch die Überführung der Trag- und Antriebsanordnungen 15,16 aus der Transportstellung in die Arbeits- und Betriebsstellung unterstützt wird. Zur Befestigung der Zugfedern 31,32 an der Halterung 30 des Tragrahmens 3 sind Haltearme 33,34 vorgesehen, welche auf Auflagekonsolen der Halterung 30 aufliegen und bei Bedarf, beispielsweise beim Durchlaufen der Totpunktlage, um Achsen 35,36 nach oben verschwenkbar sind. Eine Anpassung der Auflagekraft an unterschiedliche Arbeitsbedingungen ist durch eine Veränderung der Länge der Zugfedern 31,32 erreichbar.

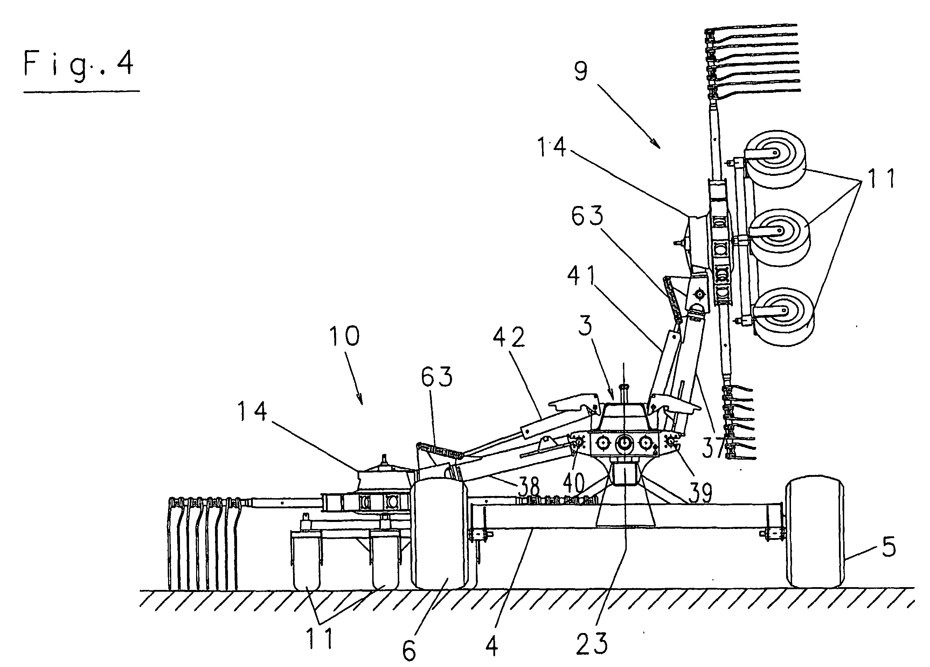

In der Fig.4 ist der hintere Teil der erfindungsgemäßen Heuwerbungsmaschine dargestellt. Wie aus dieser Figur hervorgeht, können die hinteren Kreiselrechen 9,10 ebenfalls aus einer nahezu bodenparallelen Arbeits- und Betriebstellung in eine in etwa vertikale Transportstellung überführt werden. Dazu sind die Kreiselrechen 9,10 über sich quer zur Fahrt- und Arbeitsrichtung F erstrekkende Tragarme 37,38 mit dem Tragrahmen 3 verbunden, wobei die Tragarme 37,38 um in Fahrt- und Arbeitsrichtung F gerichtete Achsen 39,40 schwenkbar am Tragrahmen 3 gehaltert sind. Zur Überführung aus der Arbeits- und Betriebsstellung in die Transportstellung und zurück sind hydraulische Kolben-Zylinder-Anordnungen 41,42 vorgesehen. Eine Reduzierung der Auflagekraft der hinteren Kreiselrechen 9,10 bzw. deren Stützräder 11 auf dem Erdboden kann beispielsweise so ausgeführt sein, wie dies bereits in der EP 0 503 396 B1 offenbart ist. Dabei sind den Kolben-Zylinder-Anordnungen 41,42 ebenfalls Kraftspeicher zugeordnet, welche vorzugsweise als Druckfedern ausgebildet und innerhalb der Kolben-Zylinder-Anordnungen 41,42 untergebracht sind. Bei der Überführung der hinteren Kreiselrechen 9,10 aus der Transportstellung in die Arbeits- und Betriebsstellung werden die besagten Druckfedern vorgespannt, so daß diese Vorspannkraft eine Reduzierung der Auflagekraft der Kreiselrechen 9,10 bzw. deren Stützräder 11 auf dem Erdboden bewirkt.

In der Fig.5 ist eine Ausführungsform einer Trag- und Antriebsanordnung 15,16 nach der Erfindung in einer Stellung (Arbeits- und Betriebsstellung) dargestellt, in der die Trag- und Antriebsanordnungen 15,16 ihre maximale Länge aufweisen. Wie aus dieser Figur hervorgeht, weisen die Trag- und Antriebsanordnungen 15,16 einen Tragarm 43 auf, welcher die Form eines Winkelhebels hat, jeweils aus einem kurzen Schenkel 44 und einem langen Schenkel 45 besteht und an der linken und rechten Seite der Heuwerbungsmaschine zur Aufnahme der Kreiselrechen 7,8 verwendbar ist. Am unteren Ende des kurzen Schenkels 44 ist eine Lagerbohrung 46 vorgesehen, die der schwenkbaren Halterung bzw. Lagerung des Tragarmes 43 am Tragrahmen 3 dient. Damit der Tragarm 43 in seiner Länge verändert werden kann, ist dieser teleskopisch ein- und ausfahrbar ausgebildet. Um dies zu erreichen, ist der lange Schenkel 45 aus einem Außenrohr 47 und einem Innenrohr 48 zusammengesetzt und kann über die hydraulische Kolben-Zylinder-Anordnung 26,27 in seiner Länge verändert werden. Am äußeren Ende des Tragarmes 43 (siehe auch Fig. 2 und 3) ist ein Kreiselgehäuse 14 eines Kreiselrechens 7,8 gehaltert. Um eine gute Bodenanpassung der Kreiselrechen 7,8 zu erreichen, ist das Kreiselgehäuse 14 um eine in Fahrt- und Arbeitsrichtung F gerichtete Achse 49 mit dem Innenrohr 48 verbunden und kann mittels einer weiteren hydraulischen Kolben-Zylinder-Anordnung 50 um die Achse 49 verschwenkt werden, was jedoch lediglich bei der Überführung der Kreiselrechen 7,8 aus der Arbeits- und Betriebsstellung in die Transportstellung vorgesehen ist. In der Arbeits- und Betriebsstellung bleibt die Kolben-Zylinder-Anordnung 50 drucklos, so daß eine gute Bodenanpassung der vorderen Kreiselrechen 7,8 sicher gestellt ist.

An den dem Tragrahmen 3 zugewandten Enden 21,22 der Trag- und Antriebsanordnungen 15,16 (siehe auch Fig.2 und 3) befinden sich Eingangsgetriebe 51, die vorzugsweise als Winkelgetriebe ausgebildet sind. An das Eingangsgetriebe 51 eines jeden Tragarmes 43 schließt sich eine innerhalb des langen Schenkels 45 des Tragarmes 43 untergebrachte und ebenfalls teleskopisch ein- und ausfahrbar ausgebildete Antriebswelle 52 an, die innerhalb des langen Schenkels 45 des Tragarmes 43 mittels Wälzlagerungen 53,54 gelagert ist. Über ein Doppelkreuzgelenk 55 ist die Antriebswelle 52 mit einer Eingangsritzelwelle 56 des Kreiselgehäuses 14 verbunden.

Beim Antriebsschema der Heuwerbungsmaschine ist es erfindungsgemäß vorgesehen, daß ausgehend von einem zentralen, auf dem Tragrahmen 3 angebrachten Verteilergetriebe 57 ein Antrieb der Kreiselrechen 7,8,9,10 über Gelenkwellen 58,59,60 erfolgt (siehe Fig.1). Die Gelenkwellen 58,59 erstrecken sich dabei zwischen dem zentralen Verteilergetriebe 57 und den Eingangsgetrieben 51, welche an den dem Tragrahmen 3 zugewandten Enden 21,22 der Trag- und Antriebsanordnungen 15,16 angebracht sind. Über die Gelenkwelle 60 wird eine vom zentralen Verteilergetriebe 57 ausgehenden Antriebsverbindung zu den hinteren Kreiselrechen 9,10 hergestellt. Über eine weitere Gelenkwelle 61 sowie einer stationär auf dem Tragrahmen 3 gelagerten Hauptantriebswelle 62 wird eine Antriebsverbindung zwischen dem Zugfahrzeug 2 und dem zentralen Verteilergetriebe 57 aufgebaut.

Zur Überführung der Kreiselrechen 7,8,9,10 aus der Arbeits- und Betriebstellung in die Transportstellung und zurück sind, wie bereits erwähnt hydraulische Kolben-Zylinder-Anordnungen 24,25,26,27 für die vorderen äußeren Kreiselrechen 7,8 und 41,42 für die hinteren inneren Kreiselrechen 9,10 vorgesehen, die je nach Ausstattungsvariante der Heuwerbungsmaschine gleichzeitig oder auch zeitlich und schaltungsmäßig unabhängig voneinander ansteuerbar sind. Eine vorteilhafte Reihenfolge der dazu erforderlichen Tätigkeiten sieht vor, daß zunächst die vorderen äußeren Kreiselrechen 7,8 und danach die hinteren Kreiselrechen 9,10 aus der Arbeits- und Betriebsstellung in die Transportstellung oder zurück überführt werden. Zweckmäßig ist es, die hydraulischen Kolben-Zylinder-Anordnungen 24,25 zur Einleitung der Schwenkbewegung der Trag- und Antriebsanordnungen 15,16 und die Kolben-Zylinder-Anordnungen 50 an den Kreiselgehäusen 14 der vorderen äußeren Kreiselrechen 7,8 über eine gemeinsame Versorgungsleitung mit Druckmittel zu versorgen. Dadurch wird sicher gestellt, daß die vorderen äußeren Kreiselrechen 7,8 zu Beginn des Überführungsvorganges aus der Arbeits- und Betriebsstellung in die Transportstellung parallel vom Erdboden abheben, so daß die Zinken 12 dabei nicht in den Erdboden stechen. Bei den hinteren Kreiselrechen 9,10 wird diese Aufgabe von Zugfedern 63 wahrgenommen (Fig.4). Weiterhin kann es sich als vorteilhaft erweisen, jeweils in den Versorgungsleitungen zu den hydraulischen Kolben-Zylinder-Anordnungen 24 und 25 bzw. 26 und 27 für die vorderen Kreiselrechen 7,8 sowie zu den Kolben-Zylinder-Anordnungen 41,42 für die hinteren Kreiselrechen 9,10 sogenannte hydraulische Mengenteiler einzusetzen, damit die hydraulischen Kolben-Zylinder-Anordnungen an der linken Maschinenseite und an der rechten Maschinenseite mit gleichen Mengen an Druckmittel versorgt werden.

Obwohl eine bevorzugte Ausführungsform in der Zeichnung und der dazugehörenden Beschreibung offenbart wurde, sind noch weitere Modifikationen und Ausführungen denkbar. So ist es beispielsweise vorstellbar, ein Antriebsschema der Heuwerbungsmaschine vorzusehen, bei dem das zentrale Verteilergetriebe 57 im vorderen Bereich des Tragrahmens 3 angebracht ist, so daß sich dann Gelenkwellen oder dgl. Antriebselemente von dem im vorderen Bereich befindlichen zentralen Verteilergetriebe 57 zu den dahinter angeordneten und an den Trag- und Antriebsanordnungen 15,16 angebrachten Eingangsgetrieben 51 erstrecken. Ausgehend von einem der Eingangsgetriebe 51 könnte dann beispielsweise ein Antrieb der hinteren Kreiselrechen 9,10 erfolgen.

## Patentansprüche

1. Heuwerbungsmaschine, insbesondere zum Schwaden von landwirtschaftlichem Halmgut mit zwei, um vertikale Achsen umlaufend angetriebenen und sich über Stützräder (11) gegenüber dem Erdboden abstützenden Kreiselrechen (9,10) oder dgl. Rechelemente, welche mit Zinken (12) bestückte und gesteuerte Zinkenarme (13) aufweisen und bezüglich der Fahrt- und Arbeitsrichtung (F) in der Arbeits- und Betriebsstellung beidseitig an einem mit Laufrädern (5,6) versehenen Tragrahmen (3) schwenkbar gelagert sind und über hydraulische Kolben-Zylinder-Anordnungen (41,42) aus einer in etwa horizontalen Arbeits- und Betriebsstellung in eine zumindest annähernd vertikale Transportstellung und zurück bringbar sind, **dadurch gekennzeichnet, daß** den Kreiselrechen (9,10) in der Arbeits- und Betriebsstellung zumindest zwei weitere Kreiselrechen (7,8) so vorgeordnet sind, daß eine durchgehende maximale Gesamtarbeitsbreite (A) erreicht wird, wobei die vorderen äußeren Kreiselrechen (7,8) über längenveränderliche Trag- und Antriebsanordnungen (15,16) am Tragrahmen (3) um in Fahrt- und Arbeitsrichtung (F) gerichtete Schwenkachsen (17,18) schwenkbar angelenkt sind, die in Bezug zur Arbeits- und Betriebsstellung der Tragund Antriebsanordnungen (15,16) der Kreiselrechen (7,8) in einem von einer Mittelebene (19,20) der Trag- und Antriebsanordnungen (15,16) nach unten weisenden Abstand (B) und bezüglich der Transportstellung der Trag- und Antriebsanordnungen (15,16) der Kreiselrechen (7,8) in einem von der Mittelebene (19,20) der Trag- und Antriebsanordnungen (15,16) zur Außenlängsseite des Tragrahmens (3) weisenden Abstand (C) angeordnet sind.

2. Heuwerbungsmaschine nach Anspruch 1, **dadurch gekennzeichnet, daß** die Lage der in Fahrt- und Arbeitsrichtung (F) gerichteten Schwenkachsen (17,18) so gewählt ist, daß dem Tragrahmen (3) zugewandte Enden (21,22) der Trag- und Antriebsanordnungen (15,16) in der Arbeits- und Betriebsstellung einen großen horizontalen Abstand (D) von einer vertikalen Längsmittelebene (23) des Tragrahmens (3) und einen großen vertikalen Abstand (E) vom Erdboden aufweisen, während in der Transportstellung eine Stellung der dem Tragrahmen (3) zugewandten Enden (21,22) der Trag- und Antriebsanordnungen (15,16) mit einem möglichst geringen horizontalen Abstand (D1) von der vertikalen Längsmittelebene (23) und mit einem möglichst geringen vertikalen Abstand (E1) vom Erdboden vorgesehen ist.

3. Heuwerbungsmaschine nach Anspruch 1 und 2, **dadurch gekennzeichnet, daß** die vorderen äußeren Kreiselrechen (7,8) durch eine Längenänderung und eine Schwenkbewegung der Trag- und Antriebsanordnungen (15,16) um die in Fahrt- und Arbeitsrichtung (F) gerichteten Schwenkachsen (17,18) aus der die maximale Gesamtarbeitsbreite (A) bestimmenden Arbeitsund Betriebsstellung in die eine maximal zulässige Transporthöhe nicht überschreitende Transportstellung und zurück überführbar sind.

4. Heuwerbungsmaschine nach einem der Ansprüche 1 bis 3, **dadurch gekennzeichnet, daß** den Trag- und Antriebsanordnungen (15,16) der vorderen äußeren Kreiselrechen (7,8) Kraftspeicher (28,29) zugeordnet sind, welche sich zwischen den dem Tragrahmen (3) zugewandten Enden (21,22) der Trag- und Antriebsanordnungen (15,16) und dem Tragrahmen (3) erstrecken.

5. Heuwerbungsmaschine nach einem der Ansprüche 1 bis 4, **dadurch gekennzeichnet, daß** die Kraftspeicher (28,29) so angeordnet sind, daß in Transportstellung auf die Trag- und Antriebsanordnungen (15,16) der Kreiselrechen (7,8) ein die Überführung aus der Transportstellung in die Arbeits- und Betriebsstellung unterstützendes Moment einwirkt, während in der Arbeits- und Betriebsstellung an den Trag- und Antriebsanordnungen (15,16) ein die Auflagekraft der Kreiselrechen (7,8) bzw. deren Stützräder (11) auf dem Erdboden reduzierendes Moment angreift.

6. Heuwerbungsmaschine nach einem der Ansprüche 1 bis 5, **dadurch gekennzeichnet, daß** die Kraftspeicher (28,29) vorzugsweise als Zugfedern (31,32) ausgeführt sind.

7. Heuwerbungsmaschine nach einem der Ansprüche 1 bis 6, **dadurch gekennzeichnet, daß** die Trag- und Antriebsanordnungen (15,16) jeweils einen Tragarm (43) aufweisen, welcher die Form eines Winkelhebels hat.

8. Heuwerbungsmaschine nach einem der Ansprüche 1 bis 7, **dadurch gekennzeichnet, daß** die Trag- und Antriebsanordnungen (15,16) jeweils einen Tragarm (43) aufweisen, welcher die Form eines Winkelhebels hat, bei dem der lange Schenkel (45) teleskopisch ein- und ausfahrbar ist.

9. Heuwerbungsmaschine nach einem der Ansprüche 1 bis 8, **dadurch gekennzeichnet, daß** an den dem Tragrahmen (3) zugewandten Enden (21,22) der Trag- und Antriebsanordnungen (15,16) Eingangsgetriebe (51) angeordnet sind.

10. Heuwerbungsmaschine nach einem der Ansprüche 1 bis 9, **dadurch gekennzeichnet, daß** die an den dem Tragrahmen (3) zugewandten Enden (21,22) der Trag- und Antriebsanordnungen (15,16) angebrachten Eingangsgetriebe (51) vorzugsweise als Winkelgetriebe ausgeführt sind.

11. Heuwerbungsmaschine nach einem der Ansprüche 1 bis 10, **dadurch gekennzeichnet, daß** die Trag- und Antriebsanordnungen (15,16) jeweils eine innenliegende und zu den Kreiselrechen (7,8) führende Antriebswelle (52) aufweisen.

12. Heuwerbungsmaschine nach einem der Ansprüche 1 bis 11, **dadurch gekennzeichnet, daß** die innenliegende und zu den Kreiselrechen (7,8) führende Antriebswelle (52) teleskopisch ein- und ausfahrbar ist.

13. Heuwerbungsmaschine nach einem der Ansprüche 1 bis 12, **dadurch gekennzeichnet, daß** die maximale Gesamtarbeitsbreite (A) zumindest dem Drei- bis Vierfachen der maximal für den Straßenverkehr zulässigen Transportbreite entspricht.

14. Heuwerbungsmaschine nach einem der Ansprüche 1 bis 13, **dadurch gekennzeichnet, daß** auf dem Tragrahmen (3) ein zentrales Verteilergetriebe (57) angeordnet ist, von dem Gelenkwellen (58,59,60) zum Antrieb der Kreiselrechen (7,8,9,10) abzweigen.

15. Heuwerbungsmaschine nach einem der Ansprüche 1 bis 14, **dadurch gekennzeichnet, daß** die Gelenkwellen (58,59) zum Antrieb der vorderen äußeren Kreiselrechen (7,8) sich zwischen dem Verteilergetriebe (57) und den Eingangsgetrieben (51) erstrecken, welche an den dem Tragrahmen (3) zugewandten Enden (21,22) der Trag- und Antriebsanordnungen (15,16) angebracht sind.

16. Heuwerbungsmaschine nach einem der Ansprüche 1 bis 15, **dadurch gekennzeichnet, daß** die zur Überführung der vorderen äußeren Kreiselrechen (7,8) aus der Arbeits- und Betriebsstellung in die Transportstellung und zurück erforderliche Längenveränderung und Schwenkbewegung der Trag- und Antriebsanordnungen (15,16) gleichzeitig ausführbar ist.

17. Heuwerbungsmaschine nach einem der Ansprüche 1 bis 16, **dadurch gekennzeichnet, daß** die zur Überführung der vorderen äußeren Kreiselrechen (7,8) aus der Arbeits- und Betriebsstellung in die Transportstellung und zurück erforderliche Längenveränderung und Schwenkbewegung der Trag- und Antriebsanordnungen (15,16) zeitlich und schaltungsmäßig unabhängig voneinander erfolgen kann.

18. Heuwerbungsmaschine nach einem der Ansprüche 1 bis 17, **dadurch gekennzeichnet, daß** die Kreiselrechen (7,8,9,10) gleichzeitig aus der Arbeits- und Betriebsstellung in die Transportstellung und zurück überführbar sind.

19. Heuwerbungsmaschine nach einem der Ansprüche 1 bis 18, **dadurch gekennzeichnet, daß** zur Überführung der Kreiselrechen (7,8,9,10) aus der Arbeits- und Betriebsstellung in die Transportstellung und zurück die vorderen äußeren Kreiselrechen (7,8) und die hinteren inneren Kreiselrechen (9,10) unabhängig von einander ansteuerbar sind.

20. Heuwerbungsmaschine nach einem der Ansprüche 1 bis 19, **dadurch gekennzeichnet, daß** die zur Überführung der vorderen äußeren Kreiselrechen (7,8) aus der Arbeits- und Betriebsstellung in die Transportstellung und zurück erforderliche Längenveränderung und Schwenkbewegung der Trag- und Antriebsanordnungen (15,16) mittels hydraulischer Kolben-Zylinder-Anordnungen (24,25,26,27) durchführbar ist.

21. Heuwerbungsmaschine nach einem der Ansprüche 1 bis 20, **dadurch gekennzeichnet, daß** die Kreiselrechen (7,8,9,10) in der Arbeits- und Betriebsstellung eine V-förmige Anordnung aufweisen.

## Claims

1. Haymaking machine, in particular for forming swaths of stalk crop, with two rotary rakes (9, 10) or similar raking elements, driven so that they rotate about vertical axes and are supported by supporting wheels (11) against the soil, which elements exhibit guided tine arms (13) fitted with tines (12), are swivelled in relation to the direction of travel and working direction (F) in the working and operating position on both sides of a support frame (3) provided with rotors (5, 6), and can be moved by hydraulic piston-cylinder arrangements (41,42) from an approximately horizontal working and operating position to at least an almost vertical transport position and back, **characterised in that** at least two further rotary rakes (7, 8) are arranged in front of the rotary rakes (9, 10) in the working and operating position, so that a continuous maximum total working width (A) is reached, wherein the front outer rotary rakes (7, 8) are swivelled by support and drive devices (15, 16) that are variable in length on the support frame (3) about swivel axes (17, 18) directed in the travel and working direction (F), which axes are arranged relative to the working and operating position of the support and drive devices (15, 16) of the rotary rakes (7, 8), at a distance (B) pointing downwards from a central plane (19, 20) of the support and drive devices (15, 16), and relative to the transport position of the support and drive devices (15, 16) of the rotary rakes (7, 8), at a distance (C) pointing towards the outer longitudinal side of the support frame (3) from the central plane (19, 20) of the support and drive devices (15, 16).

2. Haymaking machine according to claim 1, **characterised in that** the position of the swivel axes directed in the travel and working direction (F) has been chosen so that ends (21, 22) of the support and drive devices (15, 16) facing the support frame (3) exhibit a long horizontal distance (D) from a vertical longitudinal central plane (23) of the support frame (3) and a long vertical distance (E) from the ground in the working and operating position, while in the transport position a position of the ends (21, 22) of the support and drive devices (15, 16) facing the support frame (3) has the shortest possible horizontal distance (D1) from the vertical longitudinal central plane (23) and the shortest possible vertical distance (E1) from the ground.

3. Haymaking machine according to claim 1 and 2, **characterised in that** the front outer rotary rakes (7, 8) are transferable to a transport position that does not exceed a maximum permissible transport height and back by varying their length and by a swivel movement of the support and drive devices (15, 16) about the swivel axes (17, 18) directed in the travel and working direction (F) from the working and operating position determining the maximum total working width (A).

4. Haymaking machine according to one of claims 1 to 3, **characterised in that** accumulators (28, 29) are assigned to the support and drive devices (15, 16) of the front outer rotary rakes (7, 8), which accumulators extend between the ends (21, 22) of the support and drive devices (15, 16) facing the support frame (3) and the support frame (3).

5. Haymaking machine according to one of claims 1 to 4, **characterised in that** the accumulators (28, 29) are arranged so that in the transport position a moment supporting the transfer from the transport position to the working and operating position acts on the support and drive devices (15, 16) of the rotary rakes (7, 8), whilst in the working and operating position a moment reducing the force of contact of the rotary rakes (7, 8) and their supporting wheels (1) on the ground acts on the support and drive devices (15, 16).

6. Haymaking machine according to one of claims 1 to 5, **characterised in that** the accumulators (28, 29) are preferably designed as tension springs (31, 32).

7. Haymaking machine according to one of claims 1 to 6, **characterised in that** the support and drive devices (15, 16) each exhibit a supporting arm (43) which has the shape of an angle level.

8. Haymaking machine according to one of claims 1 to 7, **characterised in that** the support and drive devices (15, 16) each exhibit a supporting arm (43) which has the shape of an angle lever whose long leg (45) can be telescopically retracted and extended.

9. Haymaking machine according to one of claims 1 to 8, **characterised in that** input gears (51) are arranged on the ends (21, 22) of the support and drive devices (15, 16) facing the support frame (3).

10. Haymaking machine according to one of claims 1 to 9, **characterised in that** the input gears (51) fitted to the ends (21, 22) of the support and drive devices facing the support frame (3) are preferably designed as angular gears.

11. Haymaking machine according to one of claims 1 to 10, **characterised in that** the support and drive devices (15, 16) each exhibit an inner drive shaft (52) leading to the rotary rakes (7, 8).

12. Haymaking machine according to one of claims 1 to 11, **characterised in that** the inner drive shaft (52) leading to the rotary rakes (7, 8) is telescopically retractable and extendible.

13. Haymaking machine according to one of claims 1 to 12, **characterised in that** the maximum total working width (A) is equal to three to four times the maximum transport width permissible for road traffic.

14. Haymaking machine according to one of claims 1 to 13, **characterised in that** a central distributor gear (57) is arranged on the support frame (3), from which cardan shafts (58, 59, 60) for driving the rotary rakes (7, 8, 9, 10) branch off.

15. Haymaking machine according to one of claims 1 to 14, **characterised in that** the cardan shafts (58, 59) for driving the front outer rotary rakes (7, 8) extend between the distributor gear (57) and the input gears (51) which are fitted to the ends (21, 22) of the support and drive devices (15, 16) facing the support frame (3).

16. Haymaking machine according to one of claims 1 to 15, **characterised in that** the variation in length required for transferring the front outer rotary rakes (7, 8) from the working and operating position to the transport position and back and the swivel movement of the support and drive devices (15, 16) can be performed simultaneously.

17. Haymaking machine according to one of claims 1 to 16, **characterised in that** the variation in length required for transferring the front outer rotary rakes (7,8) from the working and operating position to the transport position and back and the swivel movement of the support and drive devices (15, 16) can be performed independently in terms of time and circuit.

18. Haymaking device according to one of claims 1 to 17, **characterised in that** the rotary rakes (7, 8, 9, 10) can be simultaneously transferred from the working and operating position to the transport position and back.

19. Haymaking machine according to one of claims 1 to 18, **characterised in that** the front outer rotary rakes (7, 8) and the rear inner rotary rakes (9, 10) can be activated independently for transferring the rotary rakes (7, 8, 9, 10) from the working and operating position to the transport position and back.

20. Haymaking machine according to one of claims 1 to 19, **characterised in that** the variation in length required for transferring the front outer rotary rakes (7, 8) from the working and operating position to the transport position and back and the swivel movement of the support and drive devices (15, 16) can be performed by means of hydraulic piston-cylinder arrangements (24, 25, 26, 27).

21. Haymaking machine according to one of claims 1 to 20, **characterised in that** the rotary rakes (7, 8, 9, 10) exhibit a V-shaped arrangement in the working and operating position.

## Revendications

1. Machine de fenaison, notamment pour former des andains de produits agricoles en tiges, à l'aide de deux roues racleuses (9, 10) ou éléments racleurs analogues, entraînés en rotation autour de deux axes verticaux et s'appuyant sur le sol par des roues d'appui (11), ces roues racleuses comportant des bras (13) commandés et garnis de dents (12), et étant montées pivotantes par rapport à la direction de déplacement et de travail (F) pour basculer dans une position de travail et de fonctionnement de part et d'autre d'un châssis de support (3) muni de roues de roulement (5, 6), et pouvant être mises par des vérins hydrauliques (41, 42) d'une position de travail et de fonctionnement sensiblement horizontal dans une position de transport au moins sensiblement verticale et inversement,
**caractérisée en ce que**
en position de travail et de fonctionnement, les roues racleuses (9, 10) sont précédées par au moins deux autres roues racleuses (7, 8), de sorte
qu'on obtient une largeur totale de travail maximale continue (A), les roues racleuses avant extérieures (7, 8) étant montées de manière pivotante sur le châssis (3) autour d'axes de pivotement (17, 18) dirigés dans la direction de déplacement et de travail (F), par des dispositifs de support et d'entraînement (15, 16) réglables en longueur, et qui
par rapport à la position de travail et de fonctionnement des dispositifs de support et d'entraînement (15, 16) des roues racleuses (7, 8) sont à une distance (B) à partir du plan médian (19, 20) des dispositifs de support et d'entraînement (15, 16), vers le bas, et qui
par rapport à la position de transport des dispositifs de support et d'entraînement (15, 16) des roues racleuses (7, 8) sont à une distance (C) du plan médian (19, 20) des dispositifs de support et d'entraînement (15, 16) par rapport au côté longitudinal extérieur du cadre de support (3).

2. Machine de fenaison selon la revendication 1,
**caractérisée en ce que**
la position des axes de pivotement (17, 18) dirigés dans la direction de déplacement et de travail (F) est choisie pour que les extrémités (21, 22) des dispositifs de support et d'entraînement (15, 16) tournés vers le châssis (3) en position de travail et de fonctionnement, présentent une distance horizontale (D) grande par rapport au plan médian longitudinal vertical (23) du châssis (3) et une distance verticale importante (E) par rapport au sol alors qu'en position de transport, une position des extrémités (21, 22) tournées vers le châssis (3) des dispositifs de support et d'entraînement (15, 16) est prévue avec une distance horizontale aussi réduite que possible (D1) par rapport au plan longitudinal médian vertical (23) et une distance verticale (E1) aussi réduite que possible par rapport au sol.

3. Machine de fenaison selon les revendications 1 et 2,
**caractérisée en ce que**
par une variation de longueur et un mouvement de pivotement des dispositifs de support et d'entraînement (15, 16) autour des axes de pivotement (17, 18) dirigés dans la direction de déplacement et de travail (F), les roues racleuses (7, 8) avant extérieures peuvent passer de la position de travail et de fonctionnement définissant la largeur de travail globale maximale (A), dans une position de transport qui ne dépasse pas la hauteur de transport maximal possible, et peuvent effectuer un mouvement inverse.

4. Machine de fenaison selon l'une des revendications 1 à 3,
**caractérisée en ce que**
des accumulateurs de force (28, 29) sont associés au dispositif de support et d'entraînement (15, 16) des roues racleuses (7, 8) extérieures avant, ces accumulateurs de force s'étendant entre le châssis (3) et les extrémités (21, 22) tournées vers le châssis (3) des dispositifs de support et d'entraînement (15, 16).

5. Machine de fenaison selon l'une des revendications 1 à 4,
**caractérisée en ce que**
les accumulateurs de force (28, 29) sont installés pour qu'en position de transport, les dispositifs de support et d'entraînement (15, 16) des roues racleuses (7, 8) soient soumis à un couple assistant le passage de la position de transport à la position de travail et de fonctionnement, alors qu'en position de travail et de fonctionnement, les dispositifs de support et d'entraînement (15, 16) sont soumis à un couple qui réduit la force d'application des roues racleuses (7, 8) ou de leur roue d'appui (11) contre le sol.

6. Machine de fenaison selon l'une des revendications 1 à 5,
**caractérisée en ce que**
les accumulateurs de force (28, 29) sont de préférence des ressorts de traction (31, 32).

7. Machine de fenaison selon les revendications 1 à 6,
**caractérisée en ce que**
les dispositifs de support et d'entraînement (15, 16) comportent chacun un bras de support (43) ayant la forme d'un levier coudé.

8. Machine de fenaison selon les revendications 1 à 7,
**caractérisée en ce que**
les dispositifs de support et d'entraînement (15, 16) ont chacun un bras de support (43) qui a la forme d'un levier coudé dont la branche longue (45) peut se déployer et se rétracter de manière télescopique.

9. Machine de fenaison selon l'une des revendications 1 à 8,
**caractérisée en ce que**
les extrémités (21, 22) des dispositifs de support et d'entraînement (15, 16) tournées vers le châssis (3) comportent des transmissions d'entrée (51).

10. Machine de fenaison selon l'une des revendications 1 à 9,
**caractérisée en ce que**
les extrémités (21, 22) des dispositifs de support et d'entraînement (15, 16) tournées vers le châssis (3) comportent des transmissions d'entrée (51) de préférence réalisées sous la forme de transmissions à renvoi d'angle.

11. Machine de fenaison selon l'une des revendications 1 à 10,
**caractérisée en ce que**
les dispositifs de support et d'entraînement (15, 16) ont chacun un arbre d'entraînement (52) situé à l'intérieur et relié aux roues racleuses (7, 8).

12. Machine de fenaison selon l'une des revendications 1 à 11,
**caractérisée en ce que**
l'arbre d'entraînement (52) situé à l'intérieur et conduisant aux roues racleuses (7, 8) est déployable et rétractable télescopiquement.

13. Machine de fenaison selon l'une des revendications 1 à 12,
**caractérisée en ce que**
la largeur de travail globale maximale (A) correspond au moins au triple jusqu'au quadruple de la largeur de transport maximale autorisée pour la circulation sur route.

14. Machine de fenaison selon l'une des revendications 1 à 13,
**caractérisée en ce que**
le châssis (3) comporte une transmission distributrice (57) centrale d'où partent des arbres articulés (58, 59, 60) pour entraîner les roues racleuses (7, 8, 9, 10).

15. Machine de fenaison selon l'une des revendications 1 à 14,
**caractérisée en ce que**
les arbres articulés (58, 59) pour l'entraînement des roues racleuses extérieures avant (7, 8) s'étendent entre le distributeur (57) et les transmissions d'entrée (51) reliées aux extrémités (21, 22) des dispositifs de support et d'entraînement (15, 16) tournés vers le châssis (3).

16. Machine de fenaison selon l'une des revendications 1 à 15,
**caractérisée en ce que**
les variations de longueur et le mouvement de pivotement des dispositifs de support et d'entraînement (15, 16) pour faire passer les roues racleuses extérieures avant (7, 8) de la position de travail et de fonctionnement à la position de transport et inversement sont effectués simultanément.

17. Machine de fenaison selon l'une des revendications 1 à 16,
**caractérisée en ce que**
la variation de longueur et le mouvement de pivotement des dispositifs de support et d'entraînement (15, 16) nécessaires pour faire passer les roues racleuses extérieures avant (7, 8) de leur position de travail et de fonctionnement à leur position de transport et inversement se font successivement dans le temps et de manière indépendante du point de vue des circuits.

18. Machine de fenaison selon l'une des revendications 1 à 17,
**caractérisée en ce que**
les roues racleuses (7, 8, 9, 10) peuvent être passées simultanément de leur position de travail et de fonctionnement dans leur position de transport et inversement.

19. Machine de fenaison selon l'une des revendications 1 à 18,
**caractérisée en ce que**
pour le passage des roues racleuses (7, 8, 9, 10) de leur position de travail et de fonctionnement dans leur position de transport et inversement, les roues racleuses extérieures avant (7, 8) et les roues racleuses intérieures arrières (9, 10) peuvent être commandées indépendamment les unes des autres.

20. Machine de fenaison selon l'une des revendications 1 à 19,
**caractérisée en ce que**
la variation de longueur et le mouvement de pivotement des dispositifs de support et d'entraînement (15, 16) pour faire passer les roues racleuses (7, 8) avant extérieures de leur position de travail et de fonctionnement dans leur position de transport et inversement, se font à l'aide de vérins hydrauliques (24, 25, 26, 27).

21. Machine de fenaison selon l'une des revendications 1 à 20,
**caractérisée en ce que**
les roues racleuses (7, 8, 9, 10) présentent une disposition en forme de V lorsqu'elles sont en position de travail et de fonctionnement.
